# FASCICULE DE BREVET EUROPEEN

(11) **EP 1 268 705 B1**
(45) Date de publication et mention de la délivrance du brevet: **15.02.2006**
(21) Numéro de dépôt: 01919583.3
(22) Date de dépôt: 27.03.2001
(51) Int. Cl.: C09K 5/10

(54) **FLUIDE DE TRANSFERT DE CHALEUR A BASE DE POLYPHENYLMETHANES AYANT UNE STABILITE THERMIQUE AMELIOREE**
WÄRMEÜBERTRAGUNGSFLÜSSIGKEIT BASIEREND AUF POLYPHENYLMETHANEN MIT VERBESSERTER THERMISCHER STABILITÄT
HEAT TRANSFER FLUID BASED ON POLYPHENYLMETHANES EXHIBITING IMPROVED THERMAL STABILITY

(30) Priorité: 29.03.2000 FR 0003944
(43) Date de publication de la demande: 02.01.2003
(73) Titulaire: Arkema, 92800 Puteaux (FR)
(72) Inventeur: COMMANDEUR, Raymond, 38220 Vizille (FR)
(86) Numéro de dépôt international: PCT/FR2001/000930
(87) Numéro de publication internationale: WO 2001/072924

(56) Documents cités:
- EP-A- 0 384 818
- EP-A- 0 500 435
- WO-A-98/50483
- COMMANDEUR ET AL: "une nouvelle famille de fluides thermiques hautes performnces" INFORMATIONS CHIMIE,FR,PARIS, vol. 376, 1996, pages 93-96, XP002076367 cité dans la demande
- DATABASE WPI Section Ch, Week 197521 Derwent Publications Ltd., London, GB; Class E14, AN 1975-34982W XP002154748 & JP 49 105781 A (MARUZEN PETROLEUM OIL), 7 octobre 1974 (1974-10-07) cité dans la demande
- CUTHBERT J ET AL: "EINE FRAGE DER STAERKE. AUSWAHLKRITERIEN FUER WAERMETRAEGERFLUESSIGKEITEN IN DRUCKLOSEN HOCHTEMPERATUR- WAERMEUEBERTRAGERN" CHEMIETECHNIK,DE,HUTHIG, HEIDELBERG, vol. 27, no. 8, août 1998 (1998-08), page 52,54,56 XP000824156 ISSN: 0340-9961

## Description

La présente invention concerne des fluides de transfert de chaleur ou caloporteurs à base polyphénylméthanes ayant une stabilité thermique améliorée et plus particulièrement des caloporteurs utilisables à haute température comprenant au moins une composition de polyphénylméthanes et au moins un mélange d'isomères de benzyl-1,2,3,4-tétrahydronaphtalènes et/ou une composition de polyphényls partiellement hydrogénés.

Les caloporteurs sont largement utilisés pour assurer un contrôle rigoureux des températures dans les opérations des industries chimiques et doivent posséder un certain nombre de caractéristiques physico-chimiques.

Ainsi, les caloporteurs qui doivent être utilisés dans une plage très large de températures, c'est-à-dire allant de -30°C à +400°C, doivent avoir, outre un bon transfert de chaleur, une température d'ébullition à pression atmosphérique élevée, une bonne stabilité thermique, une viscosité faible sur une grande plage de températures, même à basse température lors, notamment de leur mise en oeuvre, une faible tendance à corroder les matériaux de l'appareillage, une faible sensibilité à l'oxydation. Ils doivent également entraîner de faibles risques pour l'environnement en cas de fuites et également de faibles risques d'incendie.

Parmi tous ces critères, la stabilité thermique est un critère déterminant et est le souci des fabricants et producteurs de caloporteurs.

Typiquement, lorsqu'un caloporteur se dégrade , il se forme à la fois des produits volatils qui abaissent le point d'éclair du fluide de transfert de chaleur et des produits lourds qui augmentent la viscosité et abaissent ainsi le coefficient de transfert de chaleur.

De nombreuses publications proposent des produits tendant à répondre à l'ensemble des critères précédemment mentionnés mais la gamme de produits utilisables notamment à pression atmosphérique dans une gamme de température allant de l'ambiante à environ 350°C est limitée.

On pourra trouver dans l'article de COMMANDEUR et al. intitulé ; "Une nouvelle famille de fluides thermiques hautes performances (Inf. Chimie n° 376, 1996 pages 93-96) et dans KIRK-OTHMER Encyclopedia of Chemical technologie - 4^{ème} édition vol. 12 pages 993 à 1006 une liste des principaux fluides de transfert de chaleur commercialement disponibles.

A titre d'illustration de tels produits, on citera notamment les mélanges d'isomères du dibenzyltoluène, les terphényles partiellement hydrogénés, les alkylats du benzène, les mélanges de biphényle et d'oxyde de diphényle.

Furukawa Y. et col. décrivent, dans la demande de brevet JP 74 105 781 publiée le 7 octobre 1974, des fluides de transfert de chaleur constitués essentiellement par des composés de formule : 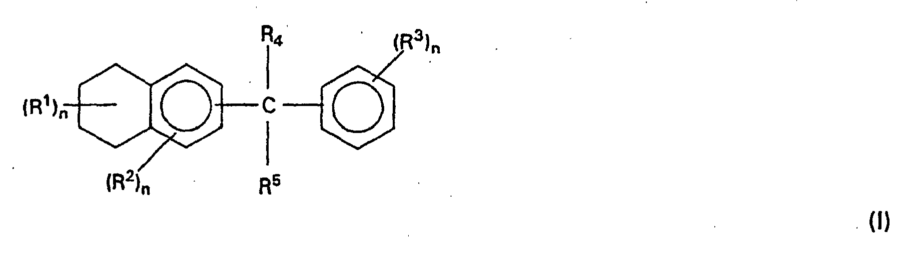
dans laquelle R¹, R², R³, R⁴ et R⁵ est choisi parmi l'atome d'hydrogène et un radical alkyle bas tel que CH₃₋ et n est égal à 1 ou 2.

La stabilité thermique de ces produits a été évaluée sous pression d'azote à des températures au plus égales à 340°C.

Ainsi, le 1-phényl-1-(5,6,7,8-tétrahydro-2-naphtyl)éthane (formule (I) dans laquelle R¹ = R² = R³ = R⁴ = H, R⁵ = CH₃., n = 1) a été testé à 340°C sous une pression d'azote de 15 kg/cm² pendant 14 jours et ne montre aucun changement notable du point d'éclair, de sa viscosité et de sa couleur.

Dans la demande de brevet internationale WO98/50483, un mélange de 1,2,3,4-tétrahydro-5-(1,phényléthyl)naphtalène et de 1,2,3,4-tetrahydro-6-(1-phényléthyl)naphtalène, commercialisé par la société Dow Chemical Company sous la désignation Dowtherm RP a été associé avec d'autres fluides de transfert de chaleur en vue d'en améliorer leur stabilité thermique.

La demanderesse a maintenant trouvé des fluides de transfert de chaleur à stabilité thermique améliorée à base de polyphénylméthanes utilisables à des températures élevées, au plus égales à 370°C et, de préférence comprises entre 320°C et 360°C sous des pressions égales ou supérieures à la pression atmosphérique qui répondent globalement aux critères précédemment mentionnés.

L'invention a donc pour objet un fluide de transfert de chaleur ou caloporteur utilisable à des températures au plus égales à 370°C et, de préférence, comprises entre 320°C et 360°C, caractérisé en ce qu'il comprend au moins un mélange d'isomères de formule : 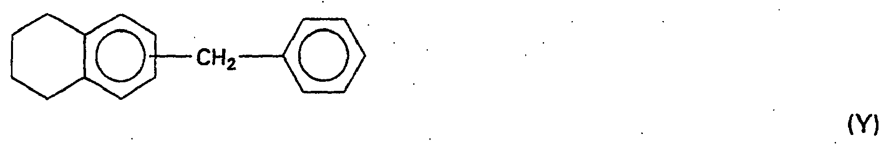
et/ou un mélange de polyphényles partiellement hydrogénés, et au moins une composition de polyphénylméthanes choisie parmi :
- les compositions (I) comprenant un mélange de produits de formule (A) : 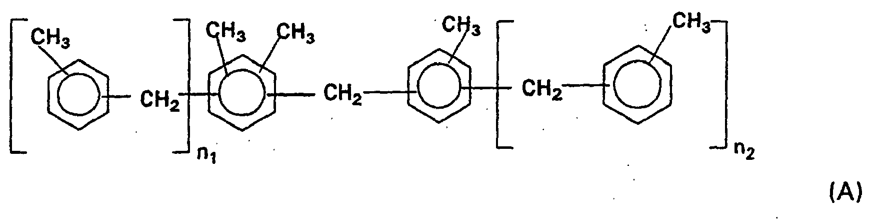
   dans laquelle n₁ et n₂=0 ou 1 et qui contient des produits (A) tels que n₁ +n₂=0 et des produits (A) tels que n₁ + n₂ =1 et de produits de formule (B) : 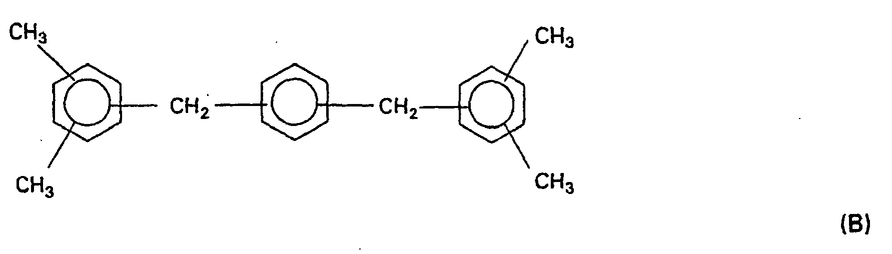 les compositions (II) comprenant un mélange de deux produits (C) et (D) dans lequel :
   ◆ le produit (C) est un mélange d'isomères de formule : 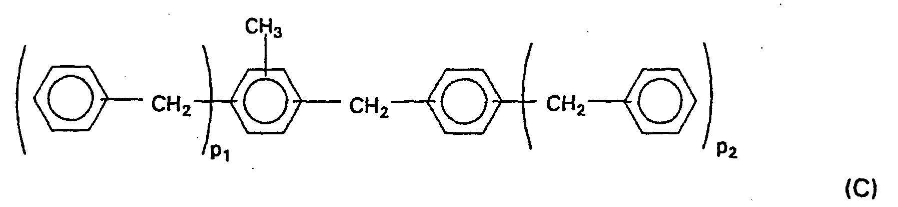 avec p₁ et p₂ = 0, 1 et 2, sachant que p₁ +p₂ ≤ 3, et
   ◆ le produit (D) est un mélange d'isomères de formule : 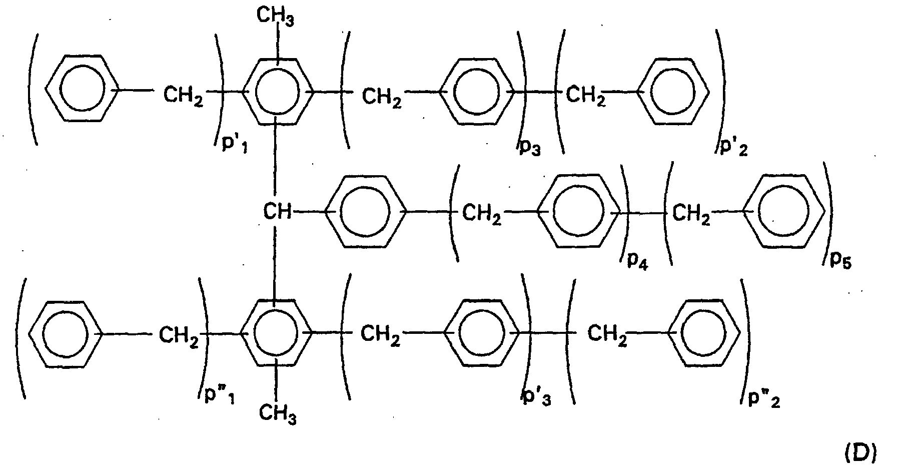 avec p'₁, p"₁ et p₄ = 0,1 et 2
      p'₂, p"₂, p₃ et p₅ = 0 et 1
      sachant que p'₁ + p"₁ + p'₂ + p"₂ + p₃ + p'₃ + p₄ + p₅ ≤ 2.
- les compositions (III) comprenant un mélange de deux produits (A1) et (A2), tels que :
   ◆ le produit (A1) est un mélange d'isomères de formule : 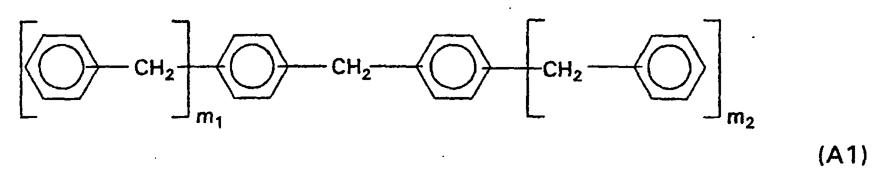
      avec m₁ et m₂ = 0, 1 ou 2 sachant que m₁ + m₂ ≤ 3,
   ◆ le produit (A2) est un mélange d'isomères de formule : 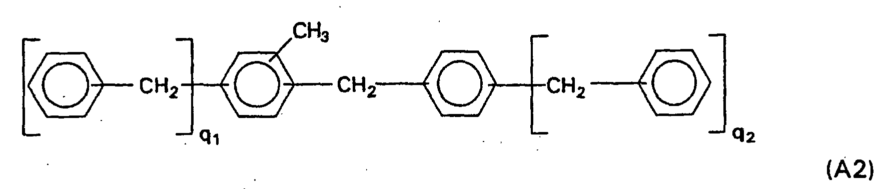
      avec q₁ et q₂ = 0, 1 ou 2 sachant que q₁ + q₂ ≤ 3,
      et en ce que l'un au moins des composés (A1) et (A2) comprenne un isomère ayant trois noyaux benzéniques.
- les compositions (IV) comprenant les deux produits (A1) et (A2) et, au moins un composé choisi parmi les produits (E1), (E2) ou (E3) suivants :
   ◆ (E1) est un isomère ou un mélange d'isomères de formule : 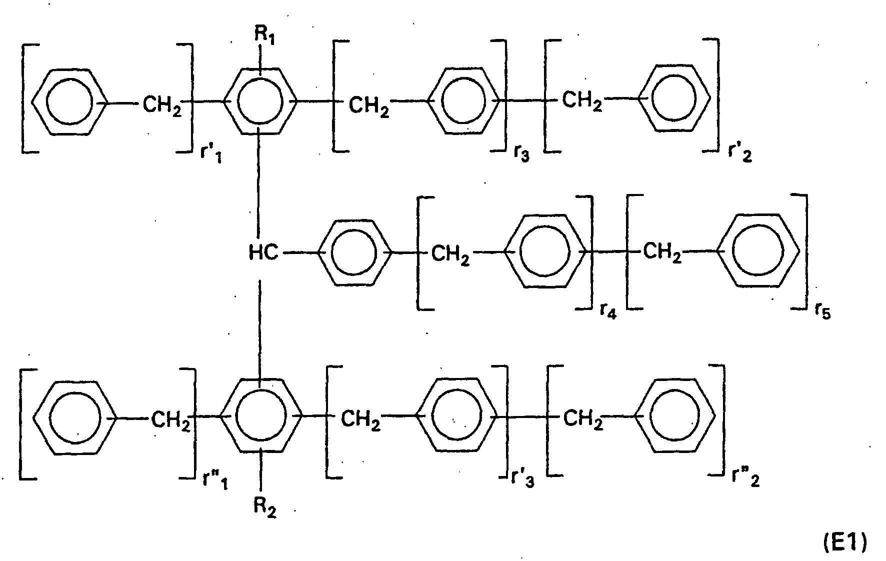
      avec r'₁, r"₁ et r₄ = 0, 1 ou 2
      r'₂, r"₂, r₃, r'₃ et r₅ = 0 et 1
      sachant que r'₁ + r"₁ + r'₂ + r"₂ + r"₃ + r'₃ + r₄ + r₅ est inférieur ou égal à 2.

R₁ et R₂ représentent un atome d'hydrogène.

(E2) est un isomère ou un mélange d'isomères de même formule générale que (E1), sauf que R₁ et R₂ représentent un méthyle et les coefficients r sont remplacés par s et ont la même signification.

(E3) est un isomère ou un mélange d'isomères de même formule générale que (E1), sauf que R₁ et R₂ sont différents et représentent un atome d'hydrogène ou un radical méthyle et les coefficients r sont remplacés par t et ont la même signification.

Selon la présente invention, les compositions (I) peuvent contenir du produit (A) à 2 noyaux, le (méthylbenzyl)xylène, et du produit (A) à 3 noyaux que l'on désigne par bis(méthylbenzyl)xylène. Ce produit (A) à 3 noyaux peut être du produit tel que n₁ = 1 et n₂ = 0, du produit tel que n₁ = 0 et n₂ = 1 ou un mélange de ces deux derniers. La composition de polyarylalcanes peut aussi contenir des produits tels que n₁ = 1 et n₂ = 1.

A titre d'illustration de compositions (I) utilisables selon la présente invention, on citera la composition de polyphénylméthanes vendue par la Société ELF ATOCHEM S.A. sous la désignation JARYTHERM AX 320 ayant une teneur pondérale en composés à 2 et 3 noyaux aromatiques supérieure à 99 %.

A titre d'illustration de compositions (II) utilisables selon la présente invention, on citera la composition de polyarylalcanes vendue par la Société ELF ATOCHEM S.A. sous la désignation JARYTHERM BT 06 qui comprend au moins 70 % en poids d'un mélange d'isomères de benzyltoluène (produit (C), p₁ = p₂ = 0), au moins 20 % en poids d'isomères de dibenzyltoluène (produit (C), p₁ = 1, p₂ = 0 ou p₁ = 0 et p₂ = 1) et du ditolylphénylméthane (produit (D), p'₁ + p"₁ + p'₂ + p"₂ + p₃ + p'₃ + p₄ + p₅ = 0) ; la composition de polyphénylméthanes vendue par la société ELF ATOCHEM S.A. sous la désignation JARYTHERM DBT qui est constituée essentiellement par 95 % à 98 % en poids d'isomères de dibenzyltoluène (produit (C), p1 +p2=1) et par 2 % à 5 % en poids de ditolylphénylméthane.

Ces compositions peuvent être obtenues par des procédés décrits dans les brevets EP 136 230-B1, EP 299 867-B1, EP 384 818-B1, EP 500 435-B1 qui consistent à effectuer la chloration du toluène ou du xylène puis d'effectuer une condensation de type Friedel et Crafts soit sur du toluène, soit sur du xylène (mélange d'isomères), soit sur un mélange toluène et xylène, soit sur du benzène, soit sur un mélange benzène et toluène. La réaction terminée, on élimine directement le ou les réactifs non transformés par distillation puis le produit brut peut être soumis à un traitement de déchloration tel que décrit dans le brevet EP 306 398-B1.

Ainsi, par exemple, les compositions (II) peuvent être obtenues par un procédé décrit dans le brevet EP 136 230-B1 qui consiste dans une première étape, à faire réagir du chlore sur du toluène par réaction radicalaire en présence de générateur de radicaux libres à une température comprise entre 50°C et 110°C puis dans une seconde étape, on soumet le produit de réaction de la première étape à une réaction de condensation avec le toluène en présence de FeCl₃ à une température comprise entre 50°C et 100°C.

Les compositions (I) peuvent être obtenues selon un procédé décrit dans le brevet EP 0 50 435-B1 qui consiste à réaliser la condensation du chlorure de (methyl)benzyl avec du xylène en présence de FeCl₃.

Selon la présente invention, le mélange d'isomères de formule (Y) est de préférence un mélange de 5-benzyl-1,2,3,4-tetrahydronaphtalène et de 6-benzyl-1,2,3,4-tetrahydronaphtalène.

Ce mélange d'isomères peut être obtenu en faisant réagir le chlorure de benzyle sur le 1,2,à,4-tétrahydronaphtalène en présence d'un catalyseur de type Friedel et Crafts tel que FeCl₃.

L'invention concerne également un fluide de transfert de chaleur à base d'un mélange d'isomères de formule (Y) et/ou d'un mélange de polyphényles partiellement hydrogénés et au moins une composition de polyphénylméthanes choisie parmi les compositions (I), (II), (III) ou (IV), caractérisé en ce que, en outre, (Y) se trouve être en mélange avec les composés (Y1) et (Y2) suivants :
**◆** (Y1) est un mélange de composés de monobenzylation de (Y) de formules : 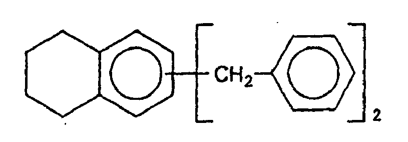
   et 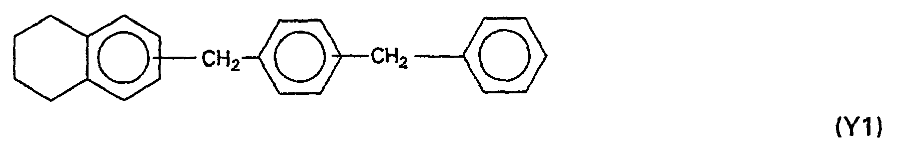
◆ (Y2) est un mélange de composés de mono- ou polybenzylation de (Y1) de formules : 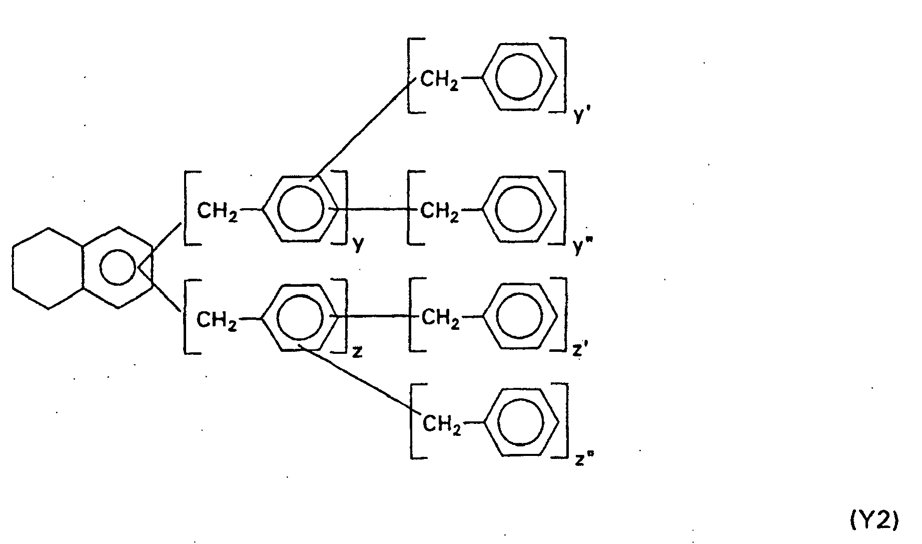
   avec y et z=0, 1 ou 2 ; y', y", z', z"=0 ou 1 sachant que y+z n'est jamais égal à 0, que y'+y"+z'+z" ≥1 et que y+z+y'+y"+z'+z" ≥3.

Selon la présente invention, les composés (Y), (Y1) et (Y2) dans le mélange (Y) + (Y1) + (Y2) se trouvent être dans les proportions pondérales suivantes :
- composés de formule (Y) compris entre 60 % et 90 %,
- composés de formule (Y1) compris entre 9 % et 35 %,
- composés de formule (Y2) compris entre 0,1 % et 10 %.

Le mélange d'isomères de formule (Y) peut être obtenu selon un procédé qui consiste à faire réagir le chlorure de benzyl sur un excès molaire de 1,2,3,4-tétrahydronaphtalène (tétraline) en présence d'un halogénure minéral ou encore d'un acide protonique.

Cette réaction a lieu en pratique à une température comprise entre 30°C et 150°C et, de préférence entre 50°C et 100°C.

Parmi les halogénures minéraux, on peut utiliser le chlorure ferrique, le trichlorure d'antimoine, le tétrachlorure de titane ou encore le chlorure d'aluminium à des teneurs pondérales par rapport aux réactifs mis en oeuvre compris habituellement entre 50 ppm et 1 % et de préférence entre 100 ppm et 0,5 %. De préférence, on utilisera le chlorure ferrique. Les acides protoniques peuvent également être utilisés : l'acide sulfurique par exemple à une concentration pondérale comprise entre 70 et 95 %. Il est aussi possible d'employer les zéolithes ou encore certains oxydes minéraux.

Après distillation de la tétraline en excès, on procède à l'élimination de l'halogénure minérale ou de l'acide protonique par toute technique connue telle que : lavage à l'eau puis séchage dans le cas où l'on utilise un acide protonique, traitement au méthylate de sodium tel que décrit dans le brevet EP 306 398 B1 dans le cas où l'on utilise un halogénure minéral.

Le produit ainsi traité est soumis, soit à une évaporation flash pour éliminer les traces d'impuretés provenant soit des matières premières ou du procédé, ou ayant une origine accidentelle ainsi que les éventuels résidus catalytiques ; soit à une distillation fractionnée de façon à obtenir des fractions comprenant les composés (Y), (Y1) et/ou (Y2). A partir de ces fractions, on peut préparer des compositions ayant des teneurs en composés (Y), (Y1) et (Y2) bien définies.

La caractérisation des composés (Y), (Y1) et (Y2) et leurs teneurs dans les diverses fractions de distillation peut être réalisée par analyse CPG suivie d'une analyse RMN du proton en milieu CCl₄ avec le tétraméthylsilane comme référence.

On ne sortirait pas du cadre de l'invention si on utilisait à la place de la tétraline, un mélange de composés plus ou moins hydrogénés du naphtalène. Ces mélanges comprennent généralement de 80 % 90 % en poids de tétraline, le complément à 100 % étant constitué par des quantités variables de décaline et de naphtalène non transformé.

Les polyphényles partiellement hydrogénés utilisables selon la présente invention sont des biphényles partiellement hydrogénés tels que le phénylcyclohexane ou bien des mélanges complexes 80/20 de terphényles (isomères ortho-, méta-, et para) et de quaterphényles plus ou moins hydrogénés. Ils sont disponibles commercialement.

S'agissant des compositions de polyphénylméthanes, on utilisera de préférence les compositions de formules (I) ou (II).

Le fluide de transfert de chaleur selon la présente invention peut être obtenu par simple mélange des produits. On peut également envisager de fabriquer ce mélange en faisant réagir le chlorure de benzyle sur du toluène (ou du benzyltoluène) et de la tétraline.

Le fluide de transfert selon la présente invention comprend au moins 50 % en poids et, de préférence, au moins 75 % en poids d'au moins une composition de polyphénylméthanes (I), (II), (III) ou (IV).

Le complément pondéral à 100 % peut comprendre un mélange d'isomères de formule (Y) ou un mélange de produits de formule (Y), (Y1) et (Y2) ou bien des polyphényles partiellement hydrogénés ou bien encore un mélange d'isomères de formule (Y) ou le mélange de produits de formules (Y), (Y1) et (Y2) avec des polyphényles partiellement hydrogénés.

Les fluides de transfert de chaleur selon la présente invention, qui consistent en des mélanges comprenant un mélange d'isomères de formule (Y) ou un mélange des composés de formules (Y), (Y1) et (Y2), et/ou des polyphényles partiellement hydrogénés avec des compositions de polyphénylméthanes (I), (II) (III) ou (IV) présentent l'avantage d'avoir une stabilité thermique supérieure aux compositions de polyphénylméthanes utilisées seules.

Les exemples qui suivent illustrent l'invention.

### EXEMPLES

### 1. CALOPORTEURS UTILISES :

□ JARYTHERM DBT, ci-après désigné par DBT ; vendu par la société ELF ATOCHEM S.A.
   Le DBT est constitué essentiellement par 95 % à 98 % en poids d'isomères du dibenzyltoluène [produit (C) avec p1+p2=1] et par 2 à 5 % de ditolylphénylméthane et présente un point d'ébullition à pression atmosphérique de 390°C.
□ JARYTHERM BT06, ci-après désigné par BT06 ; vendu par la société ELF ATOCHEM S.A.
   Sa constitution a été décrite précédemment.
□ JARYTHERM AX320, ci-après désigné par AX320 ; vendu par la société ELF ATOCHEM S.A.
   L'AX320 a une teneur pondérale en 2 et 3 noyaux aromatiques >99 %.
□ DOWTHERM RP, ci-après désigné par RP ; vendu par la société DOW CHEMICAL Co.
   Le DOWTHERM RP est un mélange d'isomères de 1,2,3,4-tétrahydro-5-(1-phényléthyl)naphtalène et 1,2,3,4-tétrahydro-6-(1-phényléthyl)naphtalène qui présente un point d'ébullition à pression atmosphérique de 354°C.
□ THERMINOL 66, ci-après désigné par HT ; vendu par la société MONSANTO.
   Le THERMINOL 66 est un mélange de terphényles partiellement hydrogénés qui présente un point d'ébullition à pression atmosphérique de 359°C.

### 2. PREPARATION DU MELANGE D'ISOMERES DE 5-BENZYL-1,2,3,4-TETRAHYDRONAPHTALENE ET DE 6-BENZYL-1,2,3,4-TETRAHYDRONAPHTALENE, CI-APRES DESIGNE PAR BTHN ET D'UN MELANGE COMPRENANT LES COMPOSES DE FORMULE (Y), (Y1) ET (Y2) DESIGNE PAR PBTHN :

Dans un réacteur de 10 l muni d'une agitation rotative, d'un réfrigérant ascendant, d'un injecteur d'azote, d'un gaine thermométrique, d'une ampoule de coulage et de moyens de chauffage, on charge 5 404 g de 1,2,3,4-tétrahydronaphtalène à 98,5 % de pureté soit 40,94 moles. Le produit est porté à 120°C sous balayage d'azote et agitation.

La sortie du réfrigérant est ensuite reliée à un barboteur à eau.

On ajoute dans le réacteur 6,7 g de FeCl₃ anhydre et on introduit, ensuite, toujours sous balayage d'azote, 1295,4 g de chlorure de benzyle à 99 % de pureté soit 10,24 moles en 3h30. Le rapport molaire 1,2,3,4-tétrahydronaphtalène / chlorure de benzyle est égal à 4.

En fin d'introduction du chlorure de benzyle, on note que la quantité d'HCl dégagé et piégé dans le barboteur est de 9,14 moles.

La teneur pondérale en chlorure de benzyle présente dans le milieu réactionnel est de 0,74 %.

La réaction est poursuivie sous agitation et balayage d'azote, pendant 1 heure à 120°C puis 1 heures à 130°C.

La quantité totale d'HCl dégagé et piégé dans le barboteur est égale à 10,2 moles.

La teneur finale en chlorure de benzyle dans le milieu réactionnel est d'environ 0,02 % en poids. Après refroidissement à température ambiante et sous balayage d'azote, le contenu du réacteur (6 325 g) est ensuite placé dans un ballon de distillation de 10 l surmonté d'une colonne adiabatique de 50 cm de haut, remplie par des ressorts en verre (efficacité de la colonne égale à environ 3 plateaux théoriques), surmontée d'une tête simple de distillation et d'un réfrigérant.

Le 1,2,3,4-tétrahydronaphtalène non transformé est récupéré par distillation sous une pression de 40 mm de mercure.

La distillation est réalisée en 4 heures à une température de pied allant de 130°C à 239°C et une température de tête allant de 115°C à 118°C pendant la majorité de la distillation avec, en fin de distillation, une montée à 142°C.

On récupère 4 200 g d'un liquide incolore ayant une teneur en 1,2,3,4-tetrahydronaphtalène supérieure à 98,5 % et peut être recyclé dans une opération ultérieure.

Le pied de distillation (2 105 g), contenant moins de 0,14 % en poids de 1,2,3,4-tétrahydronaphtalène est soumis ensuite à une opération d'élimination des faibles quantités de chlore organique résiduel, opération qui consiste à traiter ledit pied de distillation avec environ 21 g de CH₃ONa en poudre (1 % en poids par rapport au poids de produit à traiter) dans un réacteur sous agitation et, sous balayage d'azote, à 300°C pendant 3 heures.

Le produit ainsi traité est soumis à une distillation fractionnée dans l'appareillage de distillation utilisé précédemment.

On recueille une fraction de 1 400 g d'un produit ayant une température d'ébullition égale à 218/220°C sous une pression égale 18 mm de mercure et qui est constitué par plus de 98,8 % en poids d'un mélange de 6-benzyl-1,2,3,4-tétrahydronaphtalène (65 % en poids) et de 5-benzyl,1,2,3,4-tetrahydronaphtalène (35 % en poids), désigné par la suite BTHN.

C'est un liquide incolore ayant un point d'ébullition à pression atmosphérique égale à 353°C, une viscosité à 20°C = 21 mm²/s, et une teneur en chlore = 1 ppm.

La distillation est poursuivie en enlevant le garnissage de la colonne et en abaissant la pression à 12 mm de mercure.

On récupère diverses fractions qui ont des teneurs pondérales (%) en mono-, di- et tribenzyl-1,2,3,4-tétrahydronaphtalènes telles que reportées dans le tableau 1 ci-après :

**TABLEAU 1**

| **Fraction** | **Poids (g)** | **Température d'ébullition (°C)** | **Pression (mmHg)** | **BTHN (%)** | **DBTHN (%)** | **TBTHN (%)** |
|---|---|---|---|---|---|---|
| 1 | 13,5 | 220 - 290 | 12 | 20,37 | 66,3 | 1,3 |
| 2 | 440 | 290 - 305 | 12 | 0,44 | 92,2 | 5,2 |
| 3 | 69 | 305 - 330 | 12 | 0,35 | 45,7 | 53,5 |
| 4 | 14 | 330 - 344 | 12 | 0,7 | 4 | 93,3 |

Dans ce tableau 1 :
BTHN désigne le monobenzyl-1,2,3,4-tetrahydronaphtalène (formule (Y)) qui se trouve être un mélange de 6-benzyl-1,2,3,4-tetrahydronaphtalène (65 % en poids) et de 5-benzyl-1,2,3,4-tetrahydronaphtalène (35 % en poids).
DBTHN désigne les composés de formule (Y1).
TBTHN désigne les composés de formule (Y2) dans laquelle y+z+y'+y"+z'+z"=3.

En mélangeant 83 parties en poids de BTHN et 21 parties en poids de la fraction 2, on obtient un mélange désigné PBTHN comprenant environ 80 % en poids de BTHN, 19 % en poids de composés de formule Y1, 1 % en poids de formule Y2 dans laquelle y+z+y'+y"+z'+z"=3).

Ce mélange - PBTHN - a un point d'ébullition à pression atmosphérique de 359°C et une viscosité à 20°C égale à 38 mm²/s.

### 3. PREPARATION DES MELANGES DE CALOPORTEURS :

Les mélanges de caloporteurs ont été réalisés par simple mélangeage, à température ambiante des caloporteurs précédemment mentionnés, dans un réacteur agité en verre.

On agite jusqu'à obtention d'un mélange homogène.

Sur chaque mélange obtenu, on détermine la viscosité à 20°C au moyen d'un tube visonimétrique.

Les mélanges ci-après ont été réalisés :

| **Mélange** | **Constituants (% en poids)** |
|---|---|
| 1-NC | DBT 75 %, RP 25 % |
| 2-C | DBT 75 %, BTHN 25 % |
| 3-C | DBT 75 %, TH 25 % |
| 4-C | DBT 80 %, TH 20 % |
| 5-C | DBT 75 %, PBTHN 25 % |
| 6-C | BT06 75 %, BTHN 25 % |
| 7-C | AX320 75 %, BTHN 25 % |

| | |
|---|---|
| NC signifie non-conforme à l'invention (comparatif), C signifie conforme à l'invention. | |

### 4. APPAREILLAGE POUR EVALUER LA STABILITE THERMIQUE DES CALOPORTEURS ET MODE OPERATOIRE :

On utilise un réacteur en inox de 1,6 l muni d'une agitation, d'une prise de température, et d'une sortie en liaison avec un Dean-Starck muni d'un réfrigérant ascendant, lequel est en liaison avec une cuve d'eau graduée.

Le réacteur est muni d'une enceinte chauffante régulée.

L'évaluation de la stabilité thermique d'un caloporteur ou d'un mélange de caloporteurs est effectuée sur 1 kg dudit caloporteur ou dudit mélange de caloporteur et consiste à introduire dans le réacteur le produit à évaluer, de fermer le réacteur, d'effectuer un balayage au moyen d'un gaz inerte et de le porter à la température de l'essai pendant un temps déterminé.

On recueille les condensats (bas du Dean-Starck) et on détermine leurs quantités en fonction du temps.

Le volume gazeux est déterminé à partir de la cuve à eau graduée.

En fin d'essai, on effectue également la viscosité du contenu du réacteur.

### 5. ESSAIS :

### 5.1. Evaluation comparée de la stabilité thermique du :

5a - DBT seul (essai témoin),
5b - mélange 1NC (DBT / RP - 75/25),
5c - mélange 2C (DBT / BTHN - 75/25)

portés à 360°C pendant 500 heures.

Dans chaque essai, on utilise 1 kg de produit porté à 360°C sous pression atmosphérique pendant 500 heures.

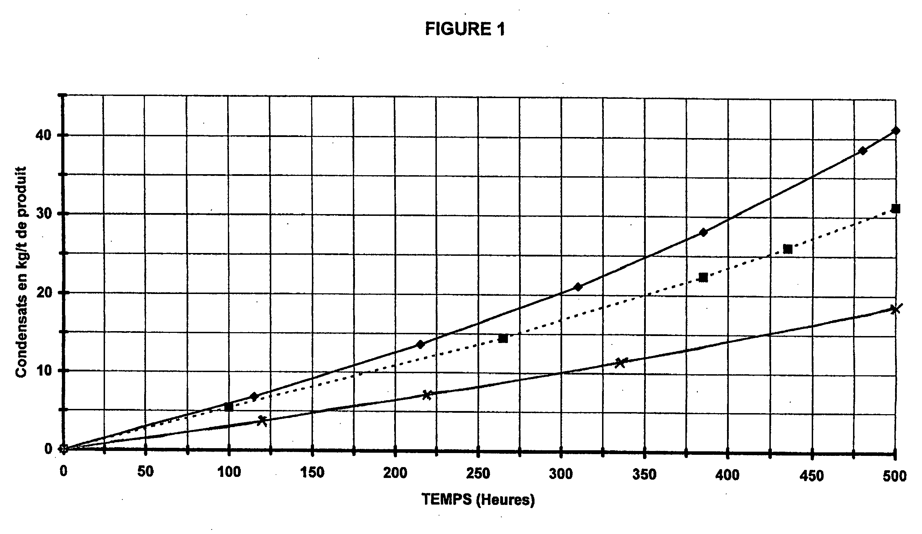

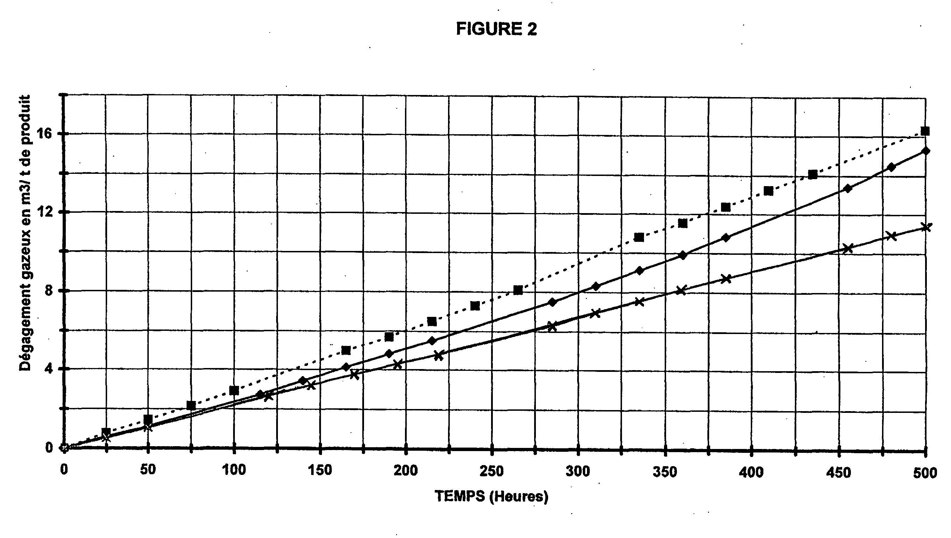

Les résultats sont reportés sur les figures 1 et 2.

La figure 1 représente la quantité de condensats en kg/t de produit en fonction du temps en heures à 360°C. Les condensats sont constitués principalement par du toluène, des xylènes, de l'éthylbenzène.

La figure 2 représente le dégagement gazeux en m3/t de produit en fonction du temps en heures à 360°C. Les produits gazeux non condensables sont constitués en majorité par CH₄, H₂ et par de faibles quantités d'hydrocarbures légers.

Sur ces figures 1 et 2 :
―◆― représente DBT,
-----■----- représente le mélange 1NC,
―×― représente le mélange 2C.

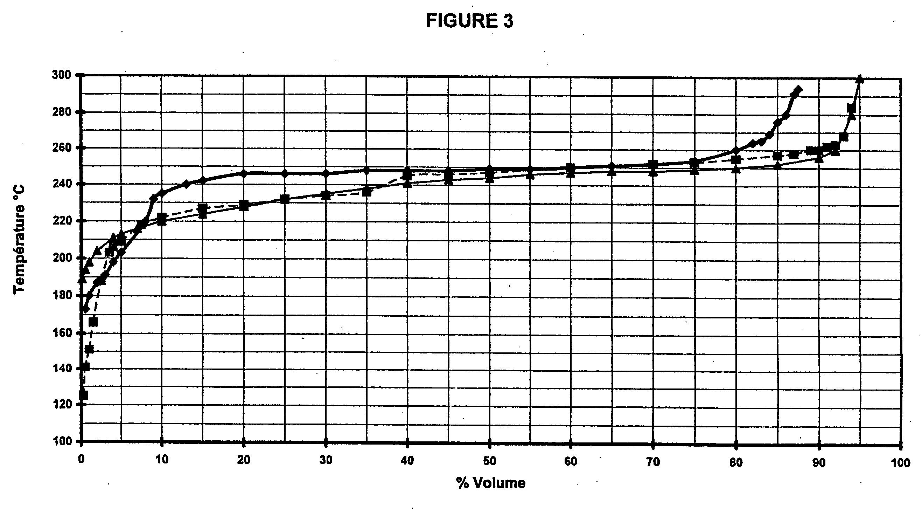

La figure 3 représente les courbes de distillation simple sous une pression de 20 mm de Hg des produits ayant subit le test d'évaluation de la stabilité thermique.

Sur cette figure 3 :
―◆― représente la courbe de distillation du DBT après 500 heures à 360°C,
-----■----- représente la courbe de distillation du mélange 1NC après 500 heures à 360°C,
―▲― représente la courbe de distillation du mélange 2C après 500 heures à 360°C.

On peut constater que la teneur en produits de dismutation à 2 cycles et égaux ou supérieurs à 4 cycles est minimum avec le BTHN, intermédiaire avec le RP et maximum avec le DBT.

Dans le tableau 2 ci-après, on reporte les viscosités initiales et après 500 heures à 360°C.

**TABLEAU 2**

| **Caloporteurs** | **Viscosité à 20°C (mm**^{**2**}**/s)** | |
|---|---|---|
| | **initiale** | **après 500h** à 360°C |
| DBT | 53 | 104 |
| RP | 45 | - |
| BTHN | 21 | - |
| 1NC | 50 | 57 |
| 2C | 42 | 47 |

Dans le tableau 3, on reporte le pourcentage en poids (%) en anthracène déterminée par CPG, présent dans les caloporteurs après 500 heures à 300°C. L'anthracène est un "marqueur" de décomposition du DBT.

Nous avons également reporté dans ce tableau 3 la couleur des produits après 500 heures à 300°C.

**TABLEAU 3**

| **Essais** | **Anthracène (%)** | **Couleur** |
|---|---|---|
| 5a | 1,46 | marron très foncé |
| 5b | 0,28 | orangé foncé |
| 5c | 0,19 | orangé clair |

### 5.2. Evaluation comparée de la stabilité thermique de :

5a - DBT seul (essai témoin),
5d - mélange 3C (DBT/HT ; 75/25)
   portés à 360°C pendant 500 heures.

L'évaluation est réalisée comme dans les essais 5.1.

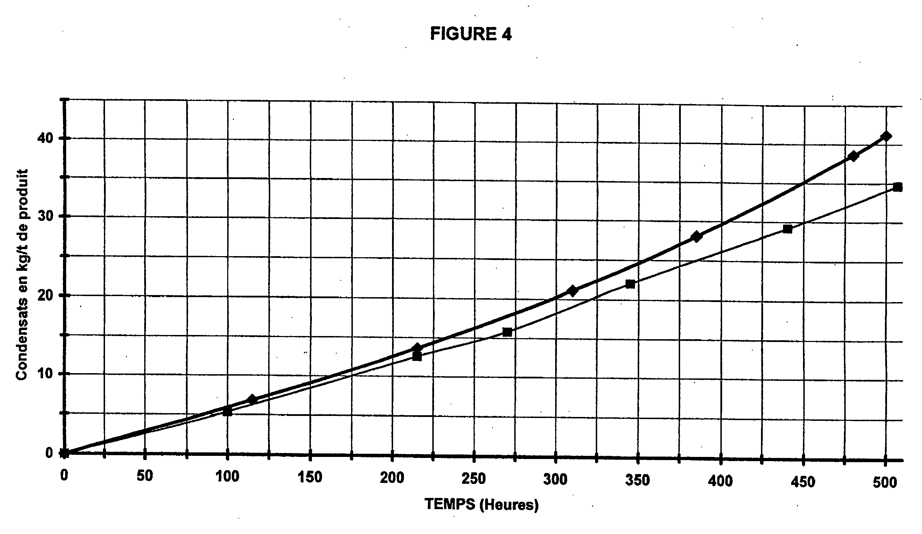

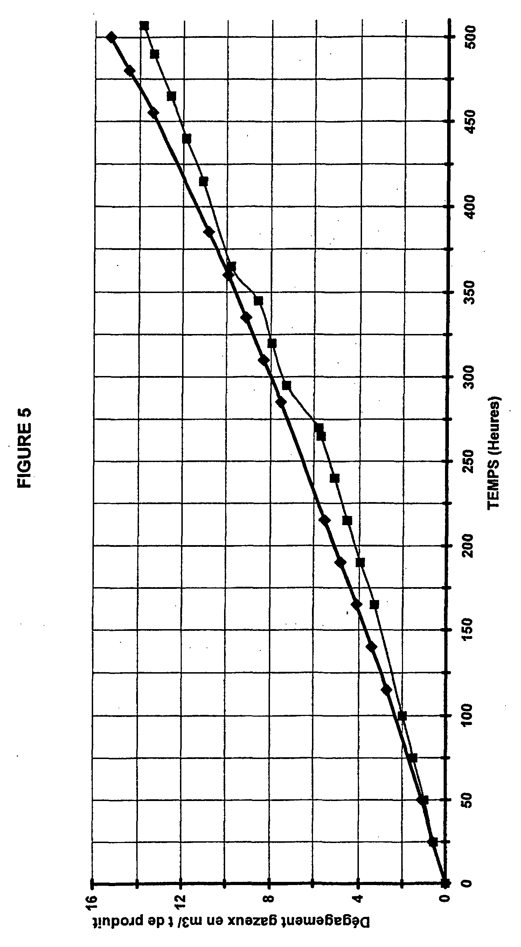

Les résultats sont reportés dans les figures 4 et 5.

La figure 4 représente la quantité de condensats en kg/t en fonction du temps en heures à 360°C.

La figure 5 représente le dégagement gazeux en m3/t en fonction du temps en heures à 360°C.

Sur ces figures 4 et 5 :
―◆― représente le DBT,
―■― représente le mélange 3C.

Dans le tableau 4, on reporte la couleur des caloporteurs, leurs viscosités à 20°C (mm²/s) et leurs pourcentages en poids (%) en anthracène après 500 heures à 360°C.

**TABLEAU 4**

| **Essais** | **Couleur** | **Viscosité (mm**^{**2**}**/s)** | | **Anthracène (%)** |
|---|---|---|---|---|
| | | **initiale** | **après 500 h à 360°C** | |
| 5a | marron très foncé | 53 | 104 | 1,46 |
| 5d | marron foncé | 57,3 | 76,5 | 0,74 |

### 5.3. Evaluation comparée de la stabilité thermique de :

5a - DBT seul,
5f - mélange 5C (DBT/PBTHN, 75/25).

portés à 360°C pendant 493 heures.

L'évaluation est réalisée comme dans les essais 5.1.

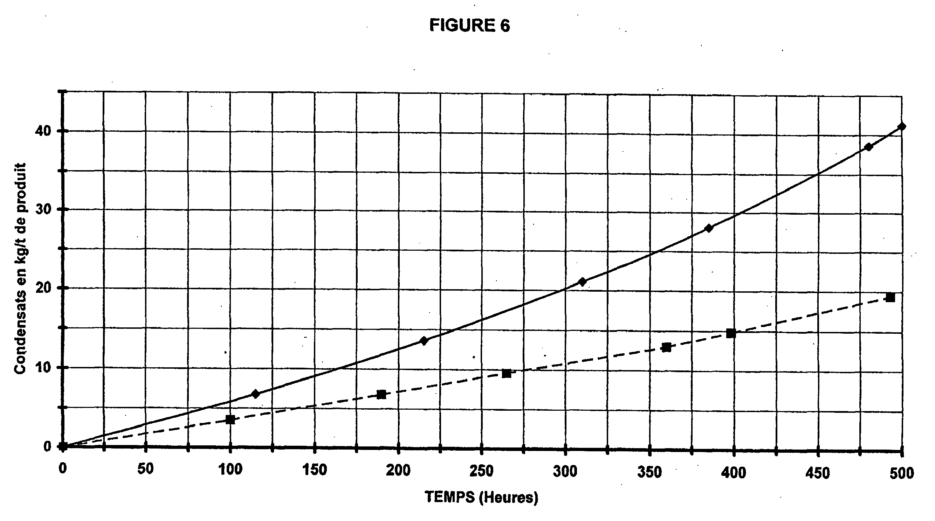

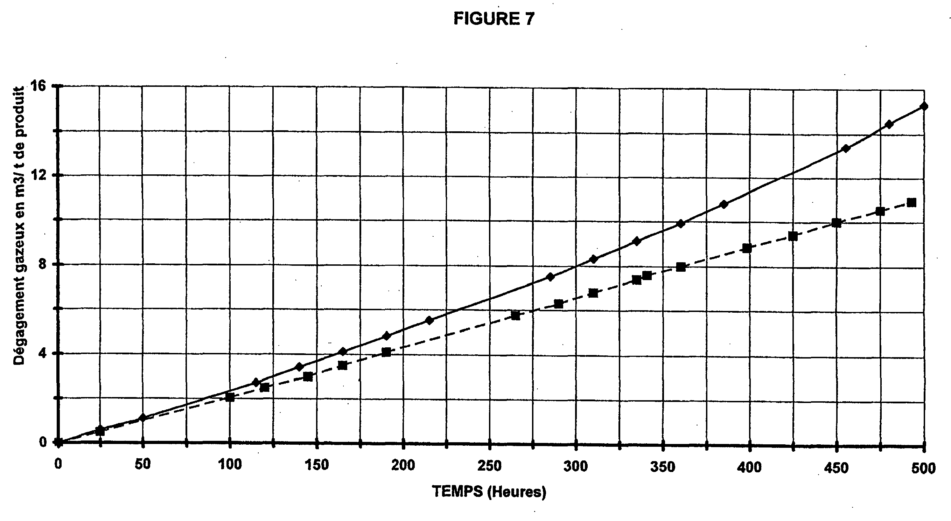

Les résultats sont portés dans les figures 6 et 7.

La figure 6 représente la quantité de condensats en kg/t en fonction du temps en heures à 360°C.

La figure 7 représente le dégagement gazeux en m3/t en fonction du temps en heures à 360°C.

Sur ces figures 6 et 7 :
―◆― représente le DBT (5a),
-----■----- représente le mélange 5C (5f).

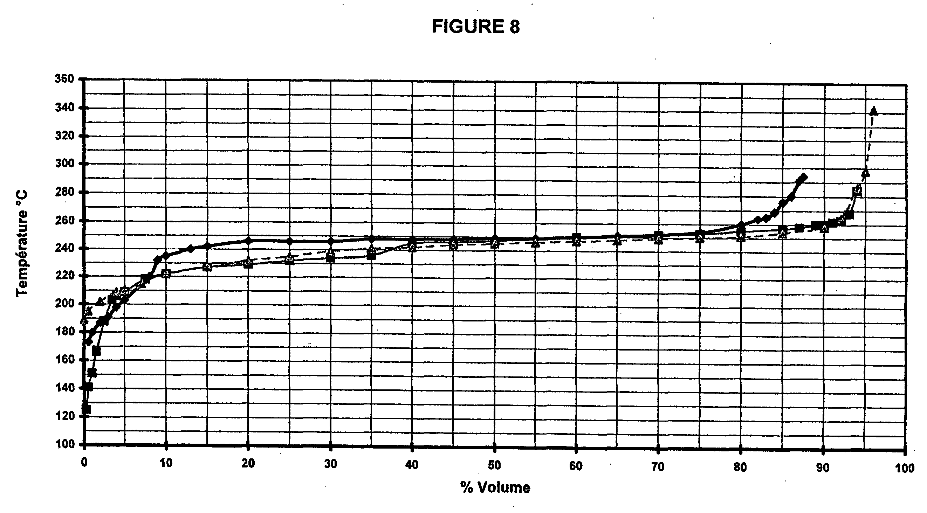

La figure 8 représente les courbes de distillation simple sous une pression de 20 mmHg des produits ayant subit le test d'évaluation thermique.

Ces courbes montrent que la teneur en légers et en lourds est inférieur au DBT seul et au DBT-RP (mélange 1 NC).

Sur cette figure 8 :
―◆― représente la courbe de distillation du DBT après 500 heures à 360°C,
―■― représente la courbe de distillation du mélange 1NC après 500 heures à 360°C,
―▲― représente la courbe de distillation du mélange 5C après 493 heures à 360°C.

Dans le tableau 5, on reporte les viscosités à 20°C (en mm²/s) et les pourcentages en poids (%) en anthracène après 493 heures à 360°C.

**TABLEAU 5**

| **Essais** | **Viscosité (mm**^{**2**}**/s)** | | **Anthracène (%)** |
|---|---|---|---|
| | **initiale** | **après 493 h à 360°C** | |
| 5a | 54 | 104 (après 500 h) | 1,46 |
| 5f | 47 | 58 | 0,13 |

### 6. EVALUATION COMPAREE DE LA STABILITE THERMIQUE DE :

1/
   6a BT06 seul,
   6b mélange 6C (BT06 /BTHN ; 75/25),
2/
   7a AX320 seul,
   7b mélange 7C (AX320 /BTHN ; 75/25)

Les essais ont été réalisés à 370°C pendant 160 heures dans un autoclave de 200 ml en inox muni d'une gaine thermométrique et d'un manomètre. On charge 50 g de fluide de transfert de chaleur à tester, on effectue un balayage d'azote puis on ferme l'autoclave qui est ensuite placé dans un bain de sable chauffé électriquement. Une régulation permet de maintenir de façon constante la température des fluides de transfert de chaleur à 370°C.

Les résultats sont reportés dans le tableau 6.

**TABLEAU 6**

| **Essais Paramètres** | **6a** | **6b** | **7a** | **7b** |
|---|---|---|---|---|
| Pression fin d'essais : | | | | |
| (en bars) | | | | |
| - à 370°C | 5,8 | 6,2 | 13 | 11 |
| - à 20°C | 2 | 2,5 | 6,3 | 5,3 |
| Aspect du produit en fin d'essai | jaune limpide | jaune clair limpide | orange foncé avec forte présence d'insolubles à 20°C | orange clair avec faible présence d'insolubles à 20°C |
| Viscosité (en mm²/s) | | | (après filtration) | (après filtration) |
| - initiale | 6,2 | 8 | 23,5 | 23 |
| - en fin d'essai | 6,2 | 7,7 | 21 | 20 |
| Analyse CPG | | | | |
| (% en poids) | | | | |
| - composé à 1 cycle | 0 → 2,01 | 0 → 1,19 | 0 → 3,28 | 0 → 2,4 |
| - composés > à 3 cycles | 0,58 → 1,82 | 0,52 → 0,88 | 0,12 → 3,32 | 0,05 → 1,75 |
| - anthracène | 0 → 0,93 | 0 → 0,22 | - | - |
| - 2,3-diméthylanthracène | - | - | 0 → 1,61 dont 1 % insoluble à 20°C | 0 → 0,72 dont 0,1 % insoluble à 20°C |

Dans ce tableau, on entend par composés à 1 cycle des composés aromatiques légers tels que toluène, xylènes, éthylbenzène et par composés > 3 cycles des produits .

L'aspect, la formation des composés à 1 cycle, des lourds et de l'anthracène pour les essais 6a / 6b de même que l'aspect, la formation des composés à 1 cycle, des lourds, du 2,3-diméthylanthracène et de la pression pour les essais 7a / 7b mettent en évidence l'effet positif du BTHN sur la stabilité thermique du BT06 et de l'AX320 respectivement.

## Revendications

1. Un fluide de transfert de chaleur, **caractérisé en ce qu'**il comprend au moins un mélange d'isomères de formule : 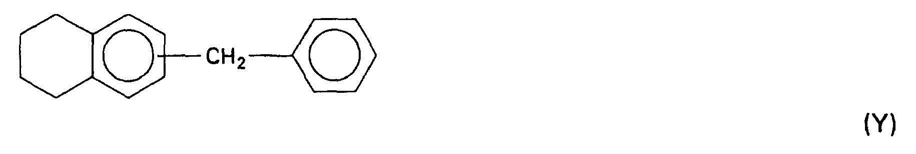 et/ou un mélange de polyphényles partiellement hydrogénés, et au moins une composition de polyphénylméthanes choisie parmi :
- les compositions (I) comprenant un mélange de produits de formule (A) : 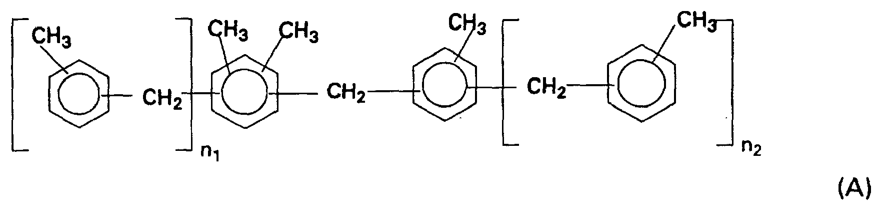
dans laquelle n₁ et n₂ = 0 ou 1 et qui contient des produits (A) tels que n₁ + n₂ = 0 et des produits (A) tels que n₁ + n₂ = 1 et de produits de formule (B) : 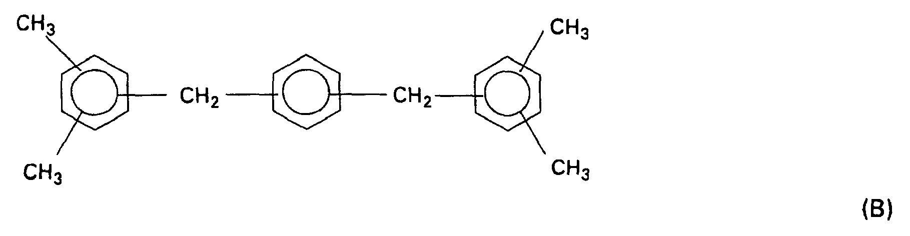 les compositions (II) comprenant un mélange de deux produits (C) et (D) dans lequel :
◆ le produit (C) est un mélange d'isomères de formule : 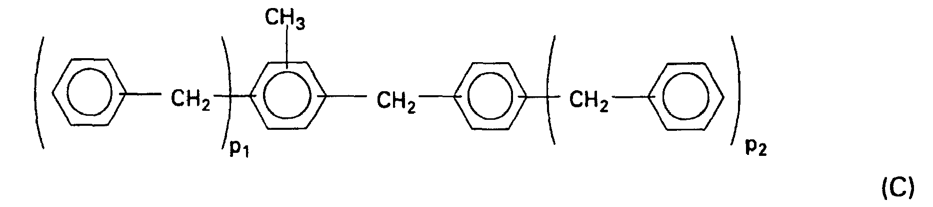
avec p₁ et p₂ = 0,1 et 2, sachant que p₁ + p₂ ≤ 3, et
◆ le produit (D) est un mélange d'isomères de formule : 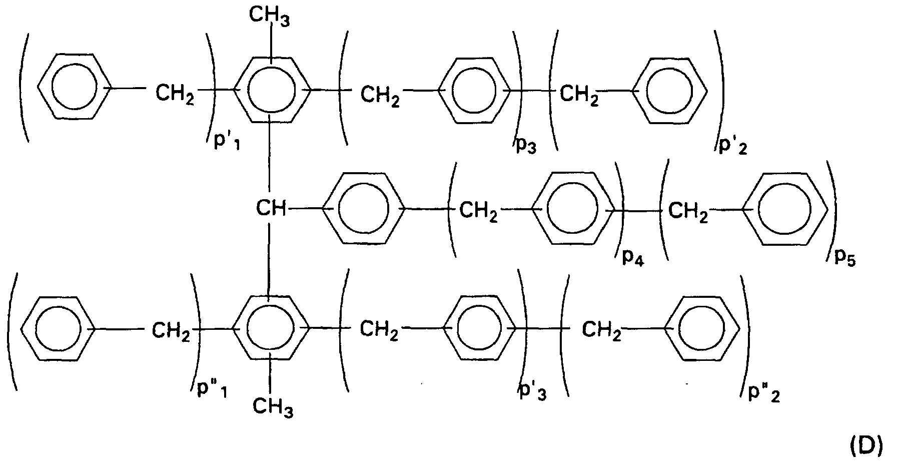
avec p'₁, p"₁ et p₄ = 0,1 et 2
p'₂, p"₂, p₃ et p₅ = 0 et 1
sachant que p'₁ + p"₁ + p'₂ + p"₂ + p₃ + p'₃ + p₄ + p₅ ≤ 2.
- les compositions (III) comprenant un mélange de deux produits (A1) et (A2), tels que :
◆ le produit (A1) est un mélange d'isomères de formule : 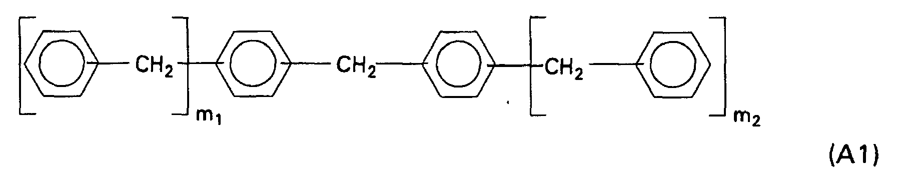
avec m₁ et m₂ = 0, 1 ou 2 sachant que m₁ + m₂ ≤ 3,
◆ le produit (A2) est un mélange d'isomères de formule : 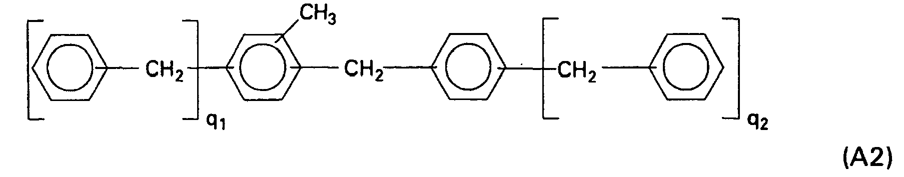
avec q₁ et q₂ = 0, 1 ou 2 sachant que q₁ + q₂ ≤ 3,
et **en ce que** l'un au moins des composés (A1) et (A2) comprenne un isomère ayant trois noyaux benzéniques.
- les compositions (IV) comprenant les deux produits (A1) et (A2) et, au moins un composé choisi parmi les produits (E1), (E2) ou (E3) suivants :
◆ (E1) est un isomère ou un mélange d'isomères de formule : 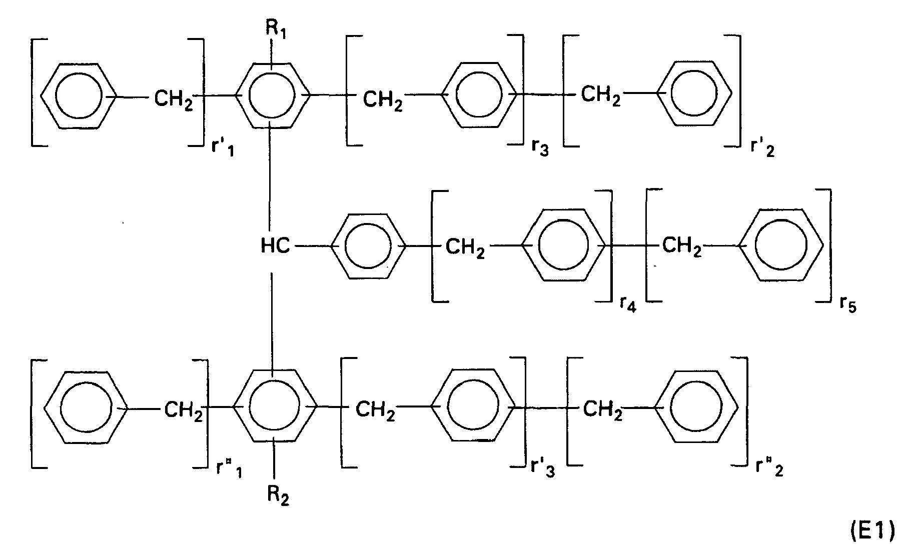
avec r'₁, r"₁ et r₄ = 0, 1 ou 2
r'₂, r"₂, r₃, r'₃ et r₅ = 0 et 1
sachant que r'₁ + r"₁ + r'₂ + r"₂ + r"₃ + r'₃ + r₄ + r₅ est inférieur
ou égal à 2.
R₁ et R₂ représentent un atome d'hydrogène.
(E2) est un isomère ou un mélange d'isomères de même formule générale que (E1), sauf que R₁ et R₂ représentent un méthyle et les coefficients r sont remplacés par s et ont la même signification.
(E3) est un isomère ou un mélange d'isomères de même formule générale que (E1), sauf que R₁ et R₂ sont différents et représentent un atome d'hydrogène ou un radical méthyle et les coefficients r sont remplacés par t et ont la même signification.

2. Fluide de transfert de chaleur selon la revendication 1, **caractérisé en ce que** les compositions de polyphénylméthanes (I) ont une teneur pondérale en composés à 2 et 3 noyaux aromatiques supérieure à 99 % - produits de formule (A) dans laquelle n₁ + n₂ = 0 et n₁ + n₂ = 1.

3. Fluide de transfert de chaleur selon la revendication 1, **caractérisé en ce que** les compositions de polyphénylméthanes (II) sont constituées essentiellement par 95 % à 98 % en poids d'isomères de dibenzyltoluène - produits de formule (C) dans laquelle p1+p2=1 - et par 2 % à 5 % en poids de ditolylphénylméthane.

4. Fluide de transfert de chaleur selon la revendication 1, **caractérisé en ce que** les compositions de polyphénylméthanes (II) comprennent au moins 70 % en poids d'un mélange d'isomères de benzyltoluène - produits de formule (C) dans laquelle p1 =p2=0, au moins 20 % en poids d'isomères de dibenzyltoluène - produits de formule (C) dans laquelle p1 + p2 = 1 et du ditolylphénylméthane.

5. Fluide de transfert de chaleur selon la revendication 1, **caractérisé en ce que**, en outre, (Y) se trouve être en mélange avec les composés (Y1) et (Y2) suivants :
◆ (Y1) est un mélange de composés de monobenzylation de (Y) de formules : 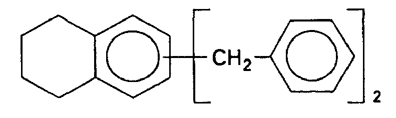 et 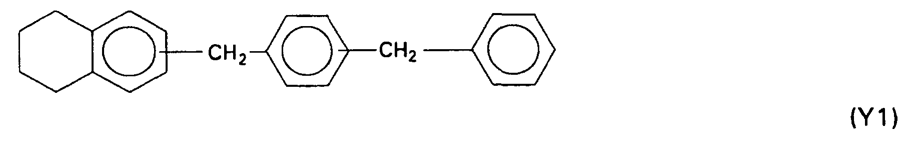
◆ (Y2) est un mélange de composés de mono- ou polybenzylation de (Y1) de formules : 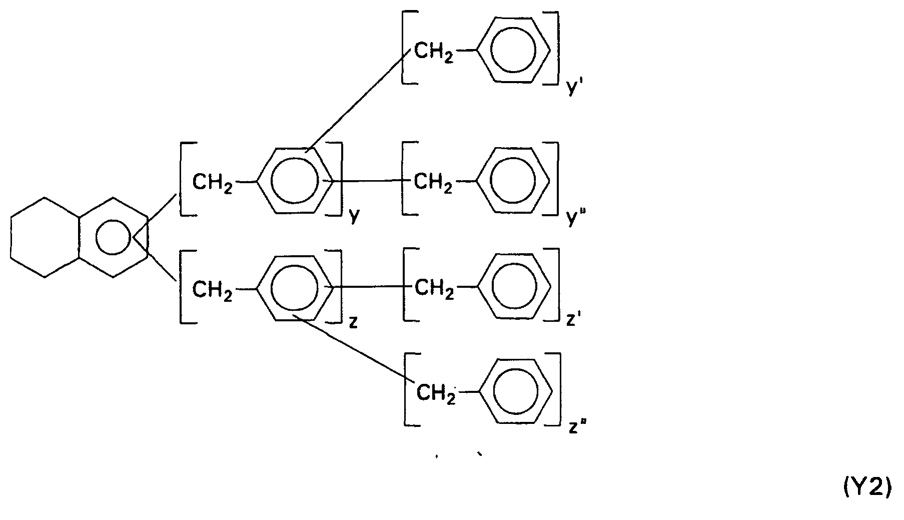 avec y et z=0, 1 ou 2 ; y', y", z', z" =0 ou 1 sachant que y+z n'est jamais égal à 0, que y' +y" +z' +z" ≥1 et que y+z+y'+y"+z'+z" ≥3.

6. Fluide de transfert de chaleur selon la revendication 5, **caractérisé** e ce que dans le mélange de composés de formules (Y), (Y1) et (Y2), lesdits composés se trouvent dans les proportions pondérales suivantes :
- composés de formule (Y) compris entre 60 % et 90 %,
- composés de formule (Y1) compris entre 9 % et 35 %,
- composés de formule (Y2) compris entre 0,1 % et 10 %.

7. Fluide de transfert de chaleur selon la revendication 6 **caractérisé en ce que** le mélange de composés de formules (Y), (Y1) et (Y2) comprend :
- 80 % en poids de composés de formule (Y),
- 19 % en poids de composés de formule (Y1),
- 1 % en poids de composés de formule (Y2), dans laquelle y+z+y'+y"+z'+z"=3.

8. Fluide de transfert de chaleur selon l'une quelconque des revendications 1 à 7, **caractérisé en ce qu'**il comprend au moins 50 % en poids d'au moins une composition de polyphénylméthanes (I), (II), (III) ou (IV).

9. Fluide de transfert de chaleur selon la revendication 8, **caractérisé en ce qu'**il comprend au moins 75 % en poids d'au moins une composition de polyphénylméthane (I), (II), (III) ou (IV).

10. Fluide de transfert de chaleur selon les revendications 8 ou 9, **caractérisé en ce que** le complément pondéral à 100 % comprend un mélange d'isomères de formules (Y), ou un mélange des composés (Y), (Y1) et (Y2) ou bien des polyphényles partiellement hydrogénés.

## Claims

1. Heat transfer fluid, **characterized in that** it comprises at least one mixture of isomers of formula: 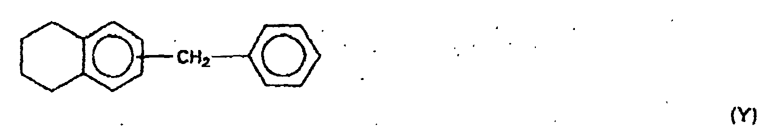 and/or a mixture of partially hydrogenated polyphenyls, and at least one polyphenylmethane composition selected from:
- compositions (I) comprising a mixture of products of formula (A): 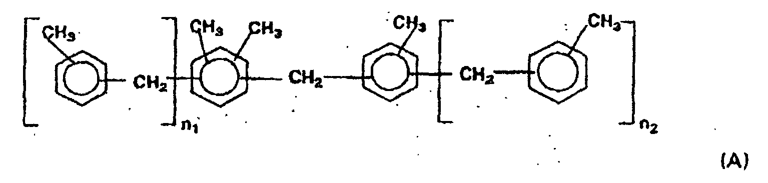
in which n₁ and n₂ = 0 or 1 and which comprises products (A) such that n₁ + n₂ = 0 and products (A) such that n₁ + n₂ = 1, and of products of formula (B): 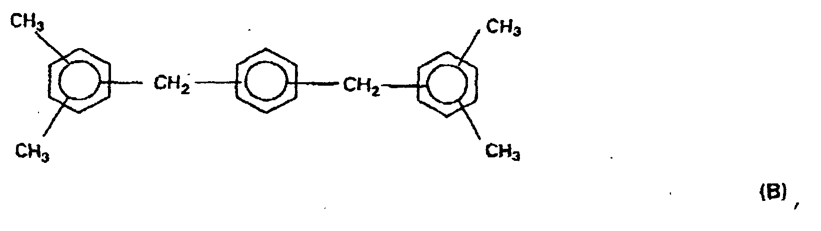
compositions (II) comprising a mixture of two products (C) and (D), in which:
◆ the product (C) is a mixture of isomers of formula: 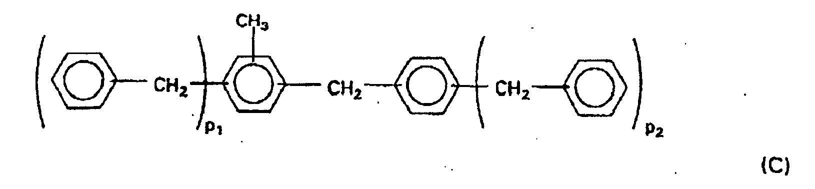
where p₁ and p₂ = 0,1 or 2, with the proviso that p₁ + p₂ ≤ 3, and
◆ the product (D) is a mixture of isomers of formula: 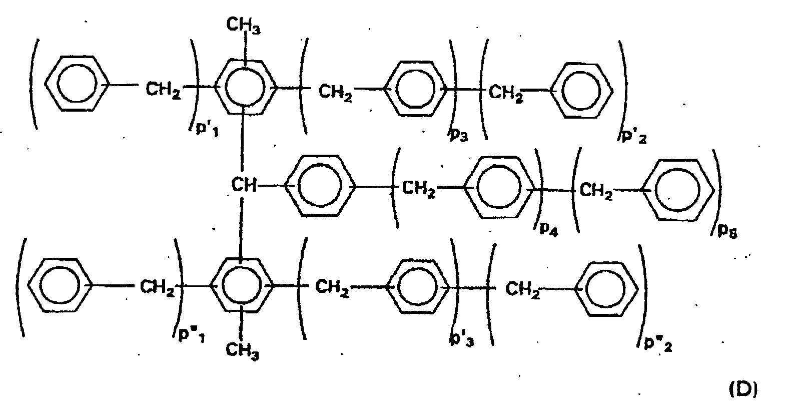
where p'₁, p"₁, and p₄ = 0,1 or 2
p'₂, p"₂, p₃, and p₅ = 0 and 1
with the proviso that p'₁ + p"₁ + p'₂ + p"₂ + p₃ + p'₃ + p₄ + p₅ ≤ 2.
- compositions (III) comprising a mixture of two products (A1) and (A2) such that:
◆ the product (A1) is a mixture of isomers of formula: 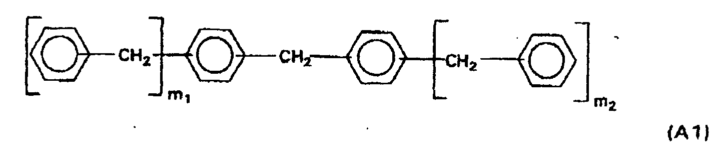
where m₁ and m₂ = 0, 1 or 2, with the proviso that m₁ + m₂ ≤ 3,
◆ the product (A2) is a mixture of isomers of formula: 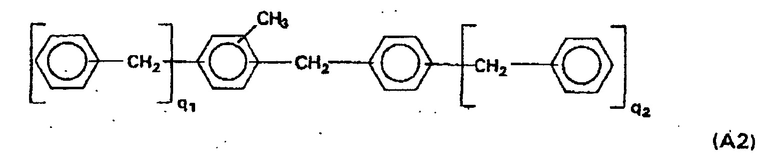
where q₁ and q₂ = 0, 1 or 2, with the proviso that q₁ + q₂ ≤ 3,
and **in that** at least one of the compounds (A1) and (A2) comprises an isomer having three benzene nuclei.
- compositions (IV) comprising the two products (A1) and (A2) and at least one compound selected from the following products (E1), (E2) or (E3):
◆ (E1) is an isomer or a mixture of isomers of formula: 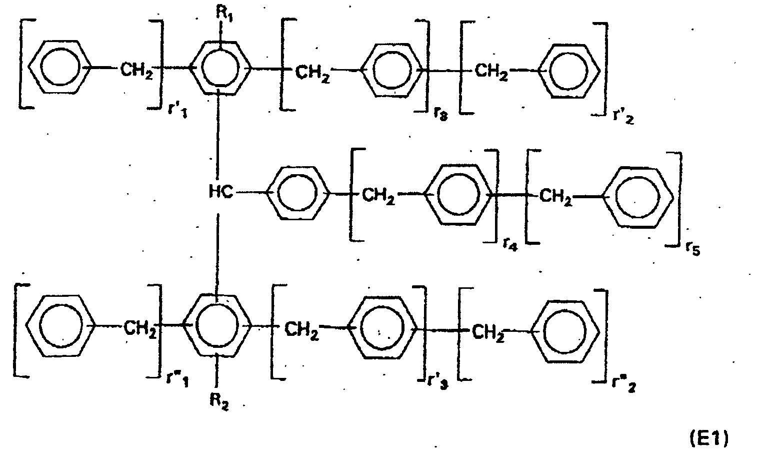
where r'₁, r"₁, and r₄ = 0, 1 or 2,
r'₂, r"₂, r₃, r'₃, and r₅ = 0 and 1
with the proviso that r'₁ + r"₁ + r'₂ + r"₂ + r"₃ + r'₃ + r₄ + r₅ is less than or equal to 2.
R₁ and R₂ represent a hydrogen atom.
(E2) is an isomer or a mixture of isomers of the same general formula as (E1) except that R₂ and R₂ represent methyl and the indices r are replaced by s and have the same meaning.
(E3) is an isomer or a mixture of isomers of the same general formula as (E1) except that R₁ and R₂ are different and represent a hydrogen atom or a methyl radical and the indices r are replaced by t and have the same meaning.

2. Heat transfer fluid according to Claim 1, **characterized in that** the polyphenylmethane compositions (I) contain more than 99% by weight of compounds having 2 and 3 aromatic nuclei - products of formula (A) in which n₁ + n₂ = 0 and n₁ + n₂ = 1.

3. Heat transfer fluid according to Claim 1, **characterized in that** the polyphenylmethane compositions (II) consist essentially of from 95% to 98% by weight of isomers of dibenzyltoluene - products of formula (C) in which p₁ + p₂ = 1 - and from 2% to 5% by weight of ditolylphenylmethane.

4. Heat transfer fluid according to Claim 1, **characterized in that** the polyphenylmethane compositions (II) comprise at least 70% by weight of a mixture of isomers of benzyltoluene - products of formula (C) in which p₁ = p₂ = 0, at least 20% by weight of isomers of dibenzyltoluene - products of formula (C) in which p₁ + p₂ = 1, and ditolylphenylmethane.

5. Heat transfer fluid according to Claim 1, **characterized in that**, in addition, (Y) is in a mixture with the following compounds (Y1) and (Y2):
◆ (Y1) is a mixture of monobenzylation compounds of (Y), of formulae: 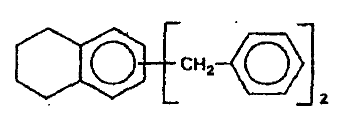
and 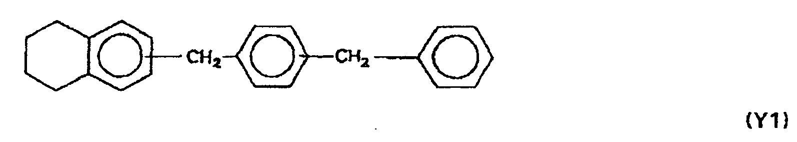
◆ (Y2) is a mixture of mono- or polybenzylation compounds of (Y1), of formulae: 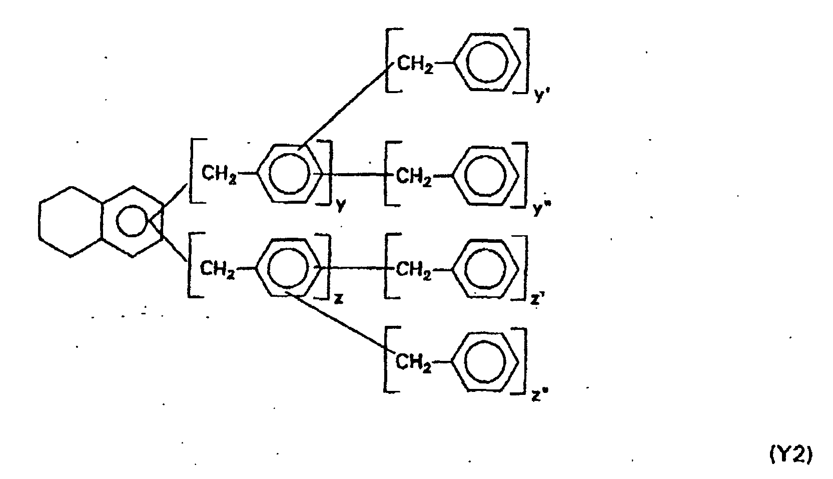
where y and z = 0, 1 or 2; y', y", z', z" = 0 or 1,
with the proviso that y + z is never 0, that y' + y" + z' + z" ≥ 1, and that y + z + y' + y" + z' + z" ≥ 3.

6. Heat transfer fluid according to Claim 5, **characterized in that** in the mixture of compounds of formulae (Y), (Y1), and (Y2) said compounds are in the following proportions by weight:
- compounds of formula (Y) - between 60% and 90%,
- compounds of formula (Y1) - between 9% and 35%,
- compounds of formula (Y2) - between 0.1% and 10%.

7. Heat transfer fluid according to Claim 6, **characterized in that** the mixture of compounds of formulae (Y), (Y1), and (Y2) comprises:
- 80% by weight of compounds of formula (Y),
- 19% by weight of compounds of formula (Y1),
- 1% by weight of compounds of formula (Y2) in which y + z + y' + y" + z' + z" = 3.

8. Heat transfer fluid according to any one of Claims 1 to 7, **characterized in that** it comprises at least 50% by weight of at least one composition of polyphenylmethanes (I), (II), (III) or (IV).

9. Heat transfer fluid according to Claim 8, **characterized in that** it comprises at least 75% by weight of at least one composition of polyphenylmethanes (I), (II), (III) or (IV).

10. Heat transfer fluid according to Claim 8 or 9, **characterized in that** the remainder to 100% by weight comprises a mixture of isomers of formulae (Y) or a mixture of compounds (Y), (Y1), and (Y2) or else partially hydrogenated polyphenyls.

## Patentansprüche

1. Wärmeübertragungsflüssigkeit, **dadurch gekennzeichnet, daß** sie mindestens ein Gemisch von Isomeren der Formel: 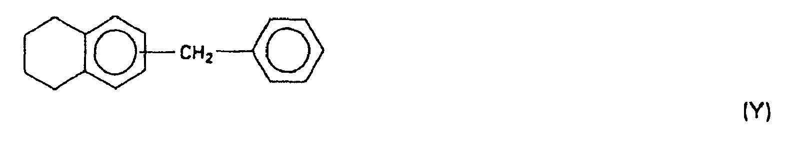
und/oder ein Gemisch von teilhydrierten Polyphenylen und mindestens eine Polyphenylmethan-Zusammensetzung, die unter
Zusammensetzungen (I), enthaltend ein Gemisch von Produkten der Formel (A): 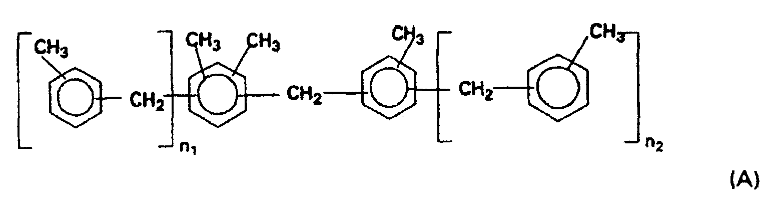
worin n₁ und n₂ gleich 0 oder 1 sind, enthaltend solche Produkte (A), daß n₁ + n₂ = 0, und solche Produkte (A), daß n₁ + n₂ = 1, und Produkten der Formel (B) 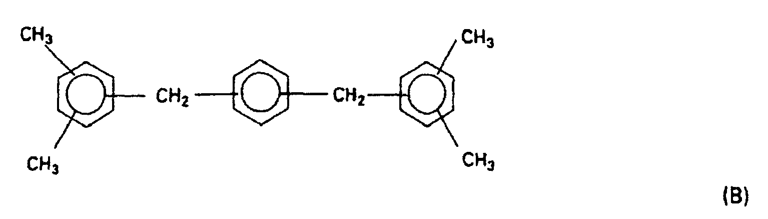
Zusammensetzungen (II), enthaltend ein Gemisch von zwei Produkten (C) und (D), worin:
• es sich bei dem Produkt (C) um ein Gemisch von Isomeren der Formel: 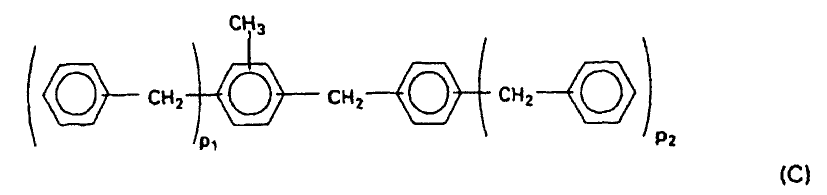
mit p₁ und p₂ = 0, 1 oder 2, mit der Maßgabe, daß p₁ + p₂ ≤ 3, handelt und
• es sich bei dem Produkt (D) um ein Gemisch von Isomeren der Formel: 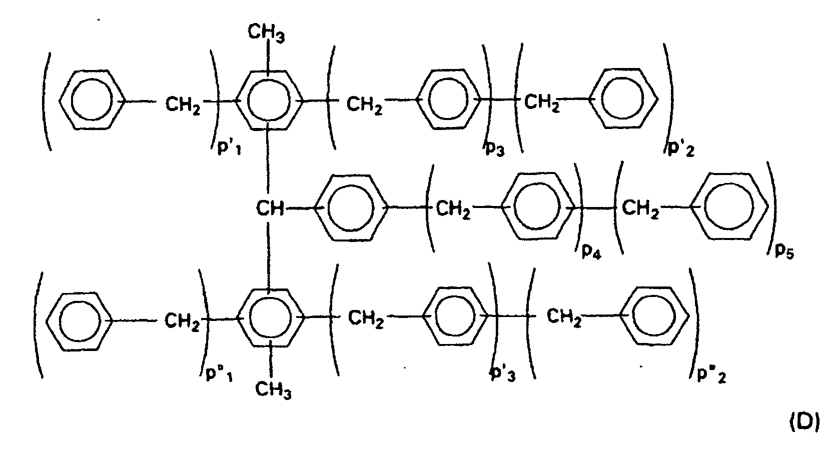
mit p'₁, p''₁ und p₄ = 0, 1 oder 2,
p'₂, p''₂, p₃ und p₅ = 0 oder 1
mit der Maßgabe, daß p'₁ + p''₁ + p'₂ + p''₂ + p₃ + p'₃ + p₄ + p₅ ≤ 2, handelt,
Zusammensetzungen (III), enthaltend ein Gemisch von zwei derartigen Produkten (A1) und (A2), daß:
• es sich bei dem Produkt (A1) um ein Gemisch von Isomeren der Formel: 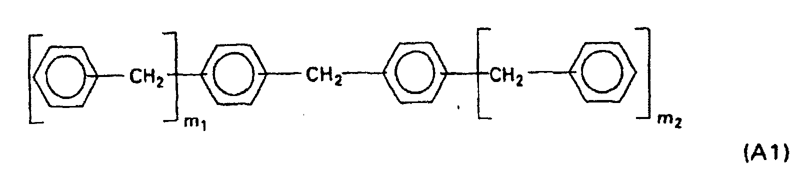
mit m₁ und m₂ = 0, 1 oder 2, mit der Maßgabe, daß m₁ + m₂ ≤ 3, handelt und
• es sich bei dem Produkt (A2) um ein Gemisch von Isomeren der Formel: 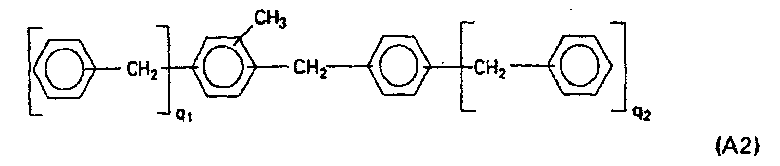
mit q₁ und q₂ = 0, 1 oder 2, mit der Maßgabe,
daß q₁ + q₂ ≤ 3, handelt,
und mindestens eine der Verbindungen (A1) und (A2) ein Isomer mit drei Benzolkernen umfaßt,
Zusammensetzungen (IV), enthaltend die beiden Produkte (A1) und (A2) und mindestens eine unter den folgenden Produkten (E1), (E2) oder (E3) ausgewählte Verbindung:
• (E1) ein Isomer oder ein Gemisch von Isomeren der Formel: 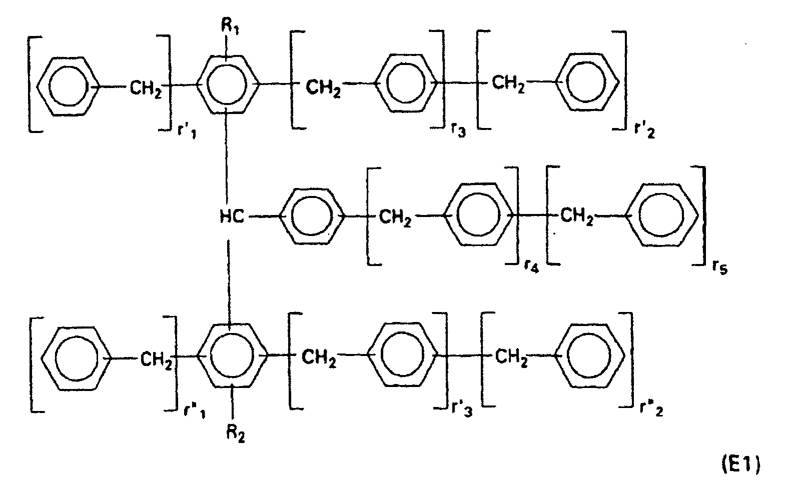
mit r'₁, r''₁ und r₄ = 0, 1 oder 2,
r'₂, r''₂, r₃, r'₃ und r₅ = 0 oder 1,
mit der Maßgabe, daß r'₁ + r''₁ + r'₂ + r''₂ + r''₃ + r'₃ + r₄ + r₅ kleiner gleich 2 ist,
wobei R₁ und R₂ für ein Wasserstoffatom stehen,ist, (E2) ein Isomer oder Gemisch von Isomeren der gleichen allgemeinen Formel wie (E1), jedoch mit der Abwandlung, daß R₁ und R₂ für Methyl stehen und die Koeffizienten r durch s ersetzt sind und die gleiche Bedeutung besitzen, ist,
(E3) ein Isomer oder Gemisch von Isomeren der gleichen allgemeinen Formel wie (E1), jedoch mit der Abwandlung, daß R₁ und R₂ verschieden sind und für ein Wasserstoffatom oder einen Methylrest stehen und die Koeffizienten r durch t ersetzt sind und die gleiche Bedeutung besitzen, ist, ausgewählt ist, enthält.

2. Wärmeübertragungsflüssigkeit nach Anspruch 1, **dadurch gekennzeichnet, daß** die Polyphenylmethan-Zusammensetzungen (I) mehr als 99 Gew.-% an Verbindungen mit 2 oder 3 aromatischen Kernen - Produkten der Formel (A) mit n₁ + n₂ = 0 und n₁ + n₂ = 1 - enthalten.

3. Wärmeübertragungsflüssigkeit nach Anspruch 1, **dadurch gekennzeichnet, daß** die Polyphenylmethan-Zusammensetzungen (II) im wesentlichen aus 95 bis 98 Gew.-% Dibenzyltoluol-Isomeren - Produkten der Formel (C) mit p₁ + p₂ = 1 - und 2 bis 5 Gew.-% Ditolylphenylmethan bestehen.

4. Wärmeübertragungsflüssigkeit nach Anspruch 1, **dadurch gekennzeichnet, daß** die Polyphenylmethan-Zusammensetzungen (II) mindestens 70 Gew.-% eines Gemischs von Benzyltoluol-Isomeren - Produkten der Formel (C) mit p₁ = p₂ = 0 - mindestens 20 Gew.-% Dibenzyltoluol-Isomere - Produkte der Formel (C) mit p₁ + p₂ = 1, und Ditolylphenylmethan enthalten.

5. Wärmeübertragungsflüssigkeit nach Anspruch 1, **dadurch gekennzeichnet, daß** außerdem (Y) im Gemisch mit den folgenden Verbindungen (Y1) und (Y2) vorliegt:
• (Y1) ist ein Gemisch von Monobenzylierungsverbindungen von (Y) der Formeln: 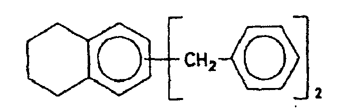 und 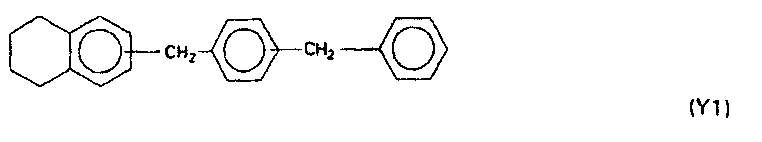
• (Y2) ist ein Gemisch von Mono- oder Polybenzylierungsverbindungen von (Y1) der Formeln: 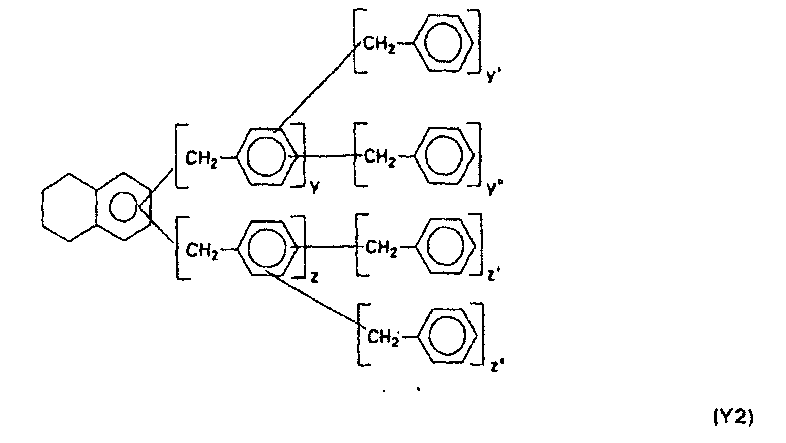 mit y und z = 0, 1 oder 2; y', y", z', z" = 0 oder 1, mit den Maßgaben, daß y + z niemals gleich 0 ist, y' + y'' + z' + z'' ≥ 1 und y + z + y' + y'' + z' + z'' ≥ 3.

6. Wärmeübertragungsflüssigkeit nach Anspruch 5, **dadurch gekennzeichnet, daß** in dem Gemisch von Verbindungen der Formeln (Y), (Y1) und (Y2) die Verbindungen in den folgenden Gewichtsanteilen vorliegen:
- zwischen 60 und 90% Verbindungen der Formel (Y),
- zwischen 9 und 35% Verbindungen der Formel (Y1),
- zwischen 0,1 und 10% Verbindungen der Formel (Y2).

7. Wärmeübertragungsflüssigkeit nach Anspruch 5, **dadurch gekennzeichnet, daß** das Gemisch von Verbindungen der Formeln (Y), (Y1) und (Y2):
- 80 Gew.-% Verbindungen der Formel (Y),
- 19 Gew.-% Verbindungen der Formel (Y1),
- 1 Gew.-% Verbindungen der Formel (Y2) mit y + z + y' + y" + z' + z" = 3
enthält.

8. Wärmeübertragungsflüssigkeit nach einem der Ansprüche 1 bis 7, **dadurch gekennzeichnet, daß** sie mindestens 50 Gew.-% einer Polyphenylmethan-Zusammensetzung (I), (II), (III) oder (IV) enthält.

9. Wärmeübertragungsflüssigkeit nach Anspruch 8, **dadurch gekennzeichnet, daß** sie mindestens 75 Gew.-% einer Polyphenylmethan-Zusammensetzung (I), (II), (III) oder (IV) enthält.

10. Wärmeübertragungsflüssigkeit nach Anspruch 8 oder 9, **dadurch gekennzeichnet, daß** der Rest auf 100 Gew.-% ein Gemisch von Isomeren der Formeln (Y) oder ein Gemisch von Verbindungen (Y), (Y1) und (Y2) oder auch teilhydrierte Polyphenyle umfaßt.
